Europäisches Patentamt

European Patent Office

Office européen des brevets

(19)

(11) **EP 1 177 233 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.⁷: **C08G 63/20**, C08L 67/00, D01F 6/92 // C08L67:00, C08L33:10

(21) Anmeldenummer: **00931130.9**

(22) Anmeldetag: **06.05.2000**

(86) Internationale Anmeldenummer:
**PCT/EP2000/004083**

(87) Internationale Veröffentlichungsnummer:
**WO 2000/068292 (16.11.2000 Gazette 2000/46)**

(54) **FADENBILDENDE POLYESTER UND COPOLYESTER UND VERFAHREN ZU DEREN HERSTELLUNG**

THREAD-FORMING POLYESTERS AND COPOLYESTERS AND METHOD FOR PRODUCING THE SAME

POLYESTERS ET COPOLYESTERS FORMANT DES FILS ET LEUR PROCEDE DE PRODUCTION

(84) Benannte Vertragsstaaten:
**AT BE CH CY DE DK ES FI FR GB GR IE IT LI LU MC NL PT SE**

(30) Priorität: **10.05.1999 DE 19921367**

(43) Veröffentlichungstag der Anmeldung:
**06.02.2002 Patentblatt 2002/06**

(73) Patentinhaber: **Diolen Industrial Fibers GmbH 42103 Wuppertal (DE)**

(72) Erfinder:
• **VIETH, Christian**
  **D-63939 Wörth (DE)**
• **SCHNELL, Ralf**
  **D-63128 Dietzenbach (DE)**
• **BATZILLA, Thomas**
  **D-63927 Bürgstadt (DE)**

(74) Vertreter: **Fett, Günter**
  **CPW GmbH**
  **Kasinostrasse 19-21**
  **42103 Wuppertal (DE)**

(56) Entgegenhaltungen:
**WO-A-93/19231        WO-A-98/47936
DE-A- 19 707 447**

**Beschreibung**

Die Erfindung betrifft fadenbildende Polyester und Copolyester, die chemische Modifizierungsmittel in Form von einkondensierten Kettenverzweigern und physikalische Modifizierungsmittel in Form von polymeren Zusatzmitteln, die im wesentlichen keine chemischen Bindungen mit den fadenbildenden Polyestern und Copolyestern eingehen, enthalten sowie ein Verfahren zu ihrer Herstellung. Die Erfindung betrifft ferner die Verwendung dieser Polyester und Copolyester zum Schnellspinnen von textilen und industriellen Garnen.

Fadenbildende kettenverzweigte Polyester und Copolyester, die sehr geringe Mengen an Kettenverzweigern enthalten, sind bekannt. So beschreibt die DE 27 28 095 A1 fadenbildende kettenverzweigte Polyester und Copolyester, die sehr geringe Mengen Pentaerythrit oder andere polyfunktionelle Verbindungen, wie Glycerin, Trimethylolpropan oder Mellitsäure enthalten. Mit dem tetrafunktionellen Verzweigungsmittel Pentaerythrit als Kettenverzweigungsmittel erhält man bei Einsatzmengen im Bereich von 500 bis 625 ppm hohe Restdehnungen und damit Produktivitätserhöhungen, während bei niedrigeren Zusatzmengen von etwa 100 bis 200 ppm die Restdehnungen und daraus resultierenden Produktivitätserhöhungen erheblich abfallen (vgl. Tabelle I der DE 27 28 095 A1). Bei hohen Zusatzmengen an Pentaerythrit unterscheiden sich aber wegen des höheren Verzweigungsgrades der entsprechenden Polyester die Eigenschaften der weiterverarbeitenden POY-Garne schon sehr von den konventionellen Polyestergarnen, deren geschätzten und bewährten Eigenschaften man naturgemäß zu erhalten wünscht, und es stellen sich ab Verspinnungsgeschwindigkeiten von 4023 m/min unzumutbare Wechselwirkungen der Garneigenschaften ein (vgl. Tabelle II der DE-OS 27 28 095).

Einen Fortschritt in dieser Richtung stellt die WO 98/47936 dar, die fadenbildende kettenverzweigte Polyester und Copolyester mit einem Molekulargewicht von > 10000 offenbart, die durch Einkondensation von 50 bis 500 ppm eines oder mehrerer, der während der Polyesterherstellung hinzugefügten Kettenverzweigungsmittel Di-, Tri- oder Tetrapentaerythrit in den polyesterbildenden Ausgangskomponenten erhalten werden. Gemäß WO 98/47936 eignen sich diese Polyester und Copolyester hervorragend zum Schnellspinnen von textilen und industriellen Garnen mit Aufwikkelgeschwindigkeiten von 2500 bis 10000 m/min.
Durch die erhöhte Kristallinität derart modifizierter Polyester und Copolyester kann es jedoch in den dem Spinnprozeß nachgeschalteten Prozessen, insbesondere beim Texturieren zu Verarbeitungsproblemen kommen, was z.B. in ungünstigen Fällen dazu führen kann, daß der Produktivitätsgewinn aus der Spinnung wieder ganz oder teilweise verloren geht.

Aus dem Stand der Technik sind ebenfalls eine Reihe von Schriften bekannt, bei denen die fadenbildenden Polyester und Copolyester physikalische Modifizierungsmittel in Form von polymeren Zusatzmitteln, die im wesentlichen keine chemischen Bindungen mit den fadenbildenden Polyestern und Copolyestern eingehen, enthalten.

So beschreibt die WO 93/19231 Fasern aus überwiegend Polyethylenterephthalat als Faserpolymeres, die dadurch gekennzeichnet sind, daß sie 0,1 bis 5 Gew.%, bezogen auf das Faserpolymere, eines zu 50 bis 90 % imidisierten Polymethacrylsäurealkylester, überwiegend in Form von Einlagerungen enthält. Das Verspinnen bei sehr hohen Geschwindigkeiten (wie 8000 m/min) soll bei üblichen Fadenbruchzahlen möglich sein.

Aus der DE 197 33 799 A1 ist die Verwendung von Copolymeren aus Methylmethacrylat, Maleinsäureanhydrid und/oder Maleinimiden und ggf. weiteren ethylenisch ungesättigten und damit copolymerisierbaren Monomeren als Zusatz zu auf Polyalkylenterephthalaten beruhenden Faserpolymeren in einer Menge von 0,1 bis 5 Gew.-% bekannt. Der Zusatz dieser Copolymere soll der Verbesserung der Schmelzspinneigenschaften von Polyester-Filamentgarnen nach dem Schnellspinnen und Superschnellspinnen mit Abzugsgeschwindigkeiten von 500 bis 10000 m/min dienen.

Die DE 197 07 447 A1 schließlich offenbart Copolymere, die dem Polyester oder Polyamid in einer Menge von 0,05 bis 5 Gew.-% zugesetzt wird, und aus mindestens zwei der folgenden Monomereinheiten aufgebaut sind:

A= Monomeres vom Typ Acrylsäure- oder Methacrylsäurealkylester
B= Monomeres vom Typ Maleinsäure oder Maleinsäureanhydrid
C= Monomeres vom Typ Styrol
mit = bis 90 Gew.-% A, 0 bis 40 Gew.-% B und 5 bis 85 Gew.-% C (Summe gleich 100 %).

Diese physikalischen Modifizierungsmittel sollen insbesondere das Weiterverarbeitungsverhalten in den Folgeschritten nicht schmälern, und das trotz erhöhter Spinngeschwindigkeit. Im Falle von Polyethylenterephthalat (PET) als Matrix-Polymer kann gemäß DE 197 07 447 A1 auch ein geringer Anteil an Verzweigerkomponenten enthalten sein, wie z. B. polyfunktionelle Säuren, wie Trimellitsäure, Pyromellitsäure oder tri- bzw. tetravalente Alkohole, wie Trimethylolpropan, Pentaerythrit oder entsprechende Hydroxysäuren.

Beim Spinnen von Polyestern und Copolyestern, insbesondere von Polyethylenterephthalat, die mit den physikalischen Modifizierungsmitteln modifiziert sind, wie sie in den WO 93/19231, DE 19733 799 A1 und DE 197 07 447 A1 offenbart sind, kann es jedoch zu Problemen beim Aufwickelverhalten kommen, die sich besonders bei höheren Geschwindigkeiten, also oberhalb von 3000 m/min, insbesondere oberhalb von 5000 m/min, manifestieren. Es handelt sich dabei zum einen um eine Zunahme von sogenannten Abschlägern. Abschläger sind dem Fachmann bekannt als Spulenfehler, die beim Spulenaufbau entstehen, wenn ein Fadenstück seitlich abrutscht. Dadurch wird der reibungslose Abzug des Materials bei der Weiterverarbeitung in Frage gestellt.

Ein weiterer Nachteil beim Spinnen, insbesondere beim Schnellspinnen, ist zum anderen die Tendenz der physikalisch modifizierten Polyester und Copolyester zur Bildung von Ausbauchungen beim Aufwickeln auf die Spule. Ausbauchungen sind dem Fachmann gleichfalls als Fehler im Spulenaufbau bekannt und führen u.a. zu Problemen bei der Verpackung und beim Versand der fertigen Spulen.

Aufgabe der vorliegenden Erfindung ist es, neue fadenbildende Polyester und Copolyester zu Verfügung zu stellen, durch die die vorstehend beschriebenen Nachteile des Standes der Technik zumindestens verringert werden.

Überraschend wurde gefunden, daß die erfindungsgemäß gestellte Aufgabe gelöst wird durch fadenbildende Polyester und Copolyester, die chemische Modifizierungsmittel in Form von einkondensierten Kettenverzweigern und physikalische Modifizierungsmitteln in Form von polymeren Zusatzmitteln, die im wesentlichen keine chemischen Bindungen mit den fadenbildenden Polyestern und Copolyestern eingehen, enthalten, wobei sich diese Polyester und Copolyester dadurch auszeichnen, daß das Verhältnis der auf die fadenbildenden Polyester und Copolyester bezogenen Gewichtsprozente an chemischen Modifizierungsmitteln zu physikalischen Modifizierungsmitteln zwischen 0,001 und 0,5 liegt.

Bevorzugte Polyester und Copolyester werden dadurch erhalten, daß das Verhältnis der Gewichtsprozente an chemischen zu physikalischen Modifizierungsmitteln, jeweils bezogen auf die fadenbildenden Polyester und Copolyester, zwischen 0,005 und 0,25 und besonders bevorzugt 0,015 und 0,05 liegt.

Die erfindungsgemäßen Polyester und Copolyester zeigen auch bei hohen Aufwickelgeschwindigkeiten von 2500 bis 10000 m/min in überraschender Weise nicht die aus dem Stand der Technik bekannten Probleme, die sich bei der Verwendung von nur einem der beiden Modifizierungsmittel bzw. einer Kombination aus chemischen und physikalischen Modifizierungsmitteln außerhalb des beanspruchten Bereiches ergeben. Das vorteilhafte Verhalten der Polyester und Copolyester gemäß der vorliegenden Erfindung manifestiert sich insbesondere in einem praktisch abschlägerfreien Aufwickelverhalten bei Spinngeschwindigkeiten zwischen 2500 und 10000 m/min, insbesondere zwischen 3000 und 6000 m/min. Die Kristallinität dieser Polyester und Copolyester ist derart, daß auch bei den dem Spinnprozeß nachgeschalteten Stufen, wie z.B. in der Texturierung, eine Verarbeitungsgeschwindigkeit erreicht werden kann, die wenigstens auf dem Niveau von ummodifizierten Polyestern und Copolyestern liegt.

Es ist somit dank der vorliegenden Erfindung möglich, die aus dem Stand der Technik bekannte Erhöhung der Spinngeschwindigkeit durch den Zusatz von chemischen oder physikalischen Modifizierungsmitteln zu erhalten und gleichzeitig durch das Einstellen eines bestimmten Mengenverhältnisses zwischen physikalischen und chemischen Modifizierungsmitteln, Polyester und Copolyester bereitzustellen, die die oben beschriebenen Probleme aus dem Stand der Technik zu lösen vermögen.

Polyester und Copolyester mit dem erfindungemäßen Gewichtsverhältnis sind aus der DE 197 07 447 A1 nicht bekannt und werden auch nicht durch diese Schrift nahegelegt.

Die angenommene Ursache für geschwindigkeitserhöhende Wirkung bestimmter physikalischer oder chemischer Modifikationsmittel ist dem Fachmann z.B. aus WO 93/19231 und aus WO 98/47936 bekannt. In beiden Fällen ist die Restdehnung derart modifizierter Polyester und Copolyester im Vergleich zu den unmodifizierten Vertretern höher. Um auf die gleiche Restdehnung zu kommen wie die unmodifizierten Polyester und Copolyester, können die modifizierten Polyester und Copolyester also mit entsprechend höherer Geschwindigkeit aufgewickelt werden, was demzufolge den Durchsatz beim Schmelzspinnen erhöht.

Ein Verdienst der erfindungsgemäßen Polyester und Copolyester ist es, daß die spinngeschwindigkeitserhöhende Wirkungen beider Modifizierungsmittel auch im erfindungsgemäßen Verhältnis erhalten bleibt. Das heißt, daß die Gesamterhöhung im Durchsatz beim Schmelzspinnen sich durchaus in additiver Weise aus den Beiträgen beider Modifizierungsarten zusammensetzen kann. Ein synergistischer Effekt bezüglich der Spinngeschwindigkeit - also eine Erhöhung über den bloßen additiven Effekt beider Modifizierungsmittel hinaus - beim Einsatz der erfindungsgemäßen Polyester und Copolyester ist zwar denkbar, konnte bislang aber nicht experimentell verifiziert werden. Wohl aber konnte festgestellt werden, daß die Polyester und Copolyester gemäß der vorliegenden Erfindung über die bloße Addition der geschwindigkeitserhöhenden Effekte hinaus die oben geschilderten Vorteile aufweisen.

Der Fachmann ist in der Lage, durch einfache Versuche die einzusetzenden Konzentrationen an physikalischen und chemischen Modifikatoren zu bestimmen. Die erfindungsgemäßen Polyester und Copolyester enthalten in aller Regel die chemischen Modifizierungsmittel zwischen 0,005 und 0,05 Gewichtsprozent. Bevorzugt ist eine Menge von 0,005 bis 0,025, noch bevorzugter von 0,005 bis 0,015, z.B. 0,011 Gewichtsprozent (110 ppm). Die Gewichtsprozentangaben sind jeweils bezogen auf die fadenbildenden Polyester und Copolyester.

Die physikalischen Modifizierungsmittel werden in Mengen von zwischen 0,1 und 5 Gewichtsprozent, bezogen auf die fadenbildenden Polyester und Copolyester, eingesetzt. Bevorzugt sind Bereiche von 0,1 bis 1, noch bevorzugter von 0,3 bis 1 Gewichtsprozent, z.B. 0,7 Gewichtsprozent (7000 ppm).

Selbstverständlich können gleichzeitig mehrere verschiedene chemische und/oder physikalische Modifizierungsmittel in den erfindungemäßen Polyestern und Copolyestern vorliegen, solange die Gewichtsverhältnisse dabei im Rahmen der beanspruchten Bereiche bleiben. Bevorzugt ist jedoch, daß nur jeweils ein Typ eines chemischen und physikalischen Modifizierungsmittels vorliegt.

Die chemischen Modifizierungsmittel sind, bevorzugt niedermolekulare, Kettenverzweiger und enthalten demzufolge mindestens drei funktionelle Gruppen, die geeignet sind, mit den polyesterbildenden Ausgangskomponenten zu reagieren. Hier sowie bei den nachfolgend genannten chemischen Modifizierungsmitteln bezieht sich die Anzahl der jeweiligen Funktionalitäten bzw. funktionellen Gruppen selbstverständlich auf die Anzahl vor der Reaktion mit den polyester- oder copolyesterbildenden Ausgangskomponenten.

Als polyesterbildende Ausgangskomponenten werden solche Diole und Dicarbonsäuren bzw. Dicarbonsäurederivate, wie Dicarbonsäurediester, bevorzugt, die zur Bildung von Polyethylenterephthalat, Polypropylenterephthalat, Polybutylenterephthalat, Poly(ethylen-2,6-naphthalin-dicarboxyfat), Poly(butylen-2,6-naphthalin-dicarboxylat), Poly(1,4-dimethylencyclohexanterephthalat) oder deren Mischpolyester auf der Basis hoher Homopolyester-Anteile von mindestens 90 Molprozent führen. Die restlichen Dicarbonsäure- und Diolkomponenten der zuletzt erwähnten Mischpolyester können in Mengen bis zu 10 Molprozent die bei der Herstellung verstreckter Polyestergebilde üblichen Co-Komponenten, wie beispielsweise Isophthalsäure, p,p'-Diphenyldicarbonsäure, alle möglichen Naphthatindicarbonsäuren, Hexahydroterephthalsäure, Adipinsäure, Sebacinsäure und Glykole, wie Trimethylen-, Tetramethylen-, Hexamethylen- und Dekamethylenglykol, sein.

Als geeignete Kettenverzweiger, die mit den polyesterbildenden Ausgangskomponenten reagieren können, kommen hier z.B. solche chemischen Modifizierungsmittel in Frage, die mindestens drei esterbildende Hydroxyl- oder Carboxylgruppen enthalten. Bevorzugte Modifizierungsmittel sind Trimellitsäure, Pyromellitsäure, Trimethylolpropan, Pentaerythrit, Glycerin oder die entsprechenden Hydroxysäuren. Selbstverständlich muß die Gruppe der Kettenverzweiger nicht auf Verbindungen, die esterbildende Hydroxy- und Carboxylgruppen enthalten, beschränkt sein. Möglich sind natürlich auch andere funktionelle Gruppen, wie z.B. Aminogruppen oder Isocyanatgruppen. Die Auswahl der chemischen Modifizierungsmittel ist lediglich durch die Anforderung beschränkt, daß die Stabilität der einzusetzenden Verbindungen ausreichend sein muß, um die bei der Polyestersynthese herrschenden Reaktionsbedingungen soweit zu überstehen, daß eine Verzweigungsreaktion im wesentlichen möglich ist.

Bevorzugt für die vorliegende Erfindung sind allerdings Polyester und Copolyester die mit chemischen Modifizierungsmitteln modifiziert sind, die mindestens sechs esterbildende Hydroxylgruppen enthalten.

Von diesen letztgenannten chemischen Modifizierungsmitteln sind besonders bevorzugt diejenigen, die gewählt werden aus der Gruppe enthaltend Dipentaerythrit, Tripentaerythrit und Tetrapentaerythrit. Derartige Modifizierungsmittel sind z.B. aus der WO 98/47936 bekannt.

Die Herstellung von kettenverzweigten Polyestern und Copolyestern ist an sich bekannt.
Da die kettenverzweigten Polyester und Copolyester insbesondere auch als chemisch modifizierte Homopolyester und Copolyester aufgefaßt werden können, ist es noch nicht einmal erforderlich, zu ihrer Herstellung die Herstellungsweise der betreffenden Homopolyester und Copolyester, wie Umesterungs- und Polykondensationsbedingungen, abzuändern. Die einzige unterschiedliche Maßnahme besteht darin, daß die Kettenverzweigungsmittel den entsprechenden polyesterbildenden Ausgangskomponenten während der ansonsten in üblicher Weise erfolgenden Polyesterherstellung in den erforderlichen Gewichtsprozentmengen hinzugefügt werden. Dies sei anhand des im Rahmen der Erfindung besonders bevorzugten kettenverzweigten Polyesters geschildert, der dadurch erhalten wird, daß man das oder die Kettenverzweigungsmittel den polyesterbildenden Ausgangskomponenten zufügt, die zur Bildung von Polyethylenterephthalat führen.

So kann die Herstellung von Polyethylenterephthalat in bekannter Weise in zwei Reaktionsstufen erfolgen. Die erste Reaktionsstufe, die kontinuierlich oder diskontinuierlich durchgeführt werden kann, besteht in der Umesterung von Dimethylterephthalat mit Ethylenglykol zu Bis-(2-hydroxyethyl)-terephthalat unter Verwendung von Umesterungskatalysatoren bei z.B. 150-200° C oder in der Direktveresterung der Terephthalsäure mit Ethylenglykol bei etwa 260° C unter Druck, die im allgemeinen keinen Katalysator erfordert und bei der ebenfalls Bis-(2-hydroxyethyl)-terephthalat gebildet wird. Durch Oligokondensationsreaktionen, die bereits unter den Umesterungsbedingungen und Direktveresterungsbedingungen erfolgen, werden daneben auch in mehr oder weniger großer Menge lineare Oligomere des Bis-(2-hydroxyethyl)-terephthalats gebildet. Eine bevorzugte Ausführungsform der Erfindung besteht darin, daß man das oder die Kettenverzweigungsmittel vor oder während der Umesterungsreaktion oder der Direktveresterung den polyesterbildenden Ausgangskomponenten, also im vorliegenden Fall dem Dimethylterephthalat und Ethylenglykol oder der Terephthalsäure und dem Ethylenglykol, so zufügt, daß ein gleichmäßig reagierendes Reaktionsgemisch entstehen kann. Nach der erfolgten Umesterung ist es vorteilhaft, vorhandene Umesterungskatalysatoren in an sich bekannter Weise durch Zugabe von einer oder mehreren Phosphorverbindungen zu blockieren. Als Blockierungsmittel kommen insbesondere Carbethoxy-methyl-diethylphosphonat, Di(polyoxyethylen)hydroxy-methylphosphonat, Tetraisopropyl-methylendiphosphonat, Phosphonoessigsäureethylester und/oder $H_3PO_4$ in Betracht, wobei eine zugegebene P-Konzentration von 30-50 ppm in der Regel ausreichend ist.

Wird die Herstellung von Bis-(2-hydroxyethyl)-terephthalat und dessen Oligomeren durch Anlagerung von Ethylenoxid an Terephthalsäure durchgeführt, so stellen naturgemäß Terephthalsäure und Ethylenoxid die polyesterbildenden Ausgangskomponenten dar. Der Begriff polyesterbildende Ausgangskomponenten schließt grundsätzlich alle Dicarbonsäure- und Dioldderivate ein, beispielsweise auch Dicarbonsäurechloride oder Dioldiacetate, die geeignet sind, zur Bildung der an sich bekannten Polyester und Copolyester verwendet zu werden, die ihrerseits während der Polyester- und Copolyestersynthese mittels der Kettenverzweigungsmittel einer Modifizierung unterworfen werden.

Die zweite Reaktionsstufe, die kontinuierlich oder diskontinuierlich durchgeführt werden kann, besteht in der Polykondensation des Bis-(2-hydroxyethyl)-terephthalats und dessen Oligomeren zu Polyethylenterephthalat bei z.B. 280-290° C im Vakuum unter Verwendung von bekannten Polykondensationskatalysatoren. Eine weitere bevorzugte Ausführungsform der Erfindung besteht darin, daß man das oder die Kettenverzweigungsmittel den polyesterbildenden Ausgangskomponenten, im vorliegenden Fall also dem Bis-(2-hydroxyethyl)-terephthalat und dessen Oligomeren, auch vor dieser Schmelzepofykondensation zufügen kann. Ein Zusatz der Kettenverzweigungsmittel im Anfangsstadium der Polykondensationsstufe ist zwar im Prinzip ebenfalls möglich, ist aber weniger bevorzugt.

Das so hergestellte kettenverzweigte Polyethylenterephthalat besitzt eine intrinsische Viskosität von 0,70-0,75, was einer relativen Lösungsviskosität von 1,63 bis 1,70 entspricht, gemessen in 1 %iger m-Kresol-Lösung bei 20°C.

Soll das kettenverzweigte Polyethylenterephthalat zur Herstellung von industriellen Garnen, z.B. für den Einsatz von Reifenkorden, verwendet werden, so muß dessen Molekulargewicht analog wie im Falle des Polyethylenterephthalats erhöht werden. Dies kann nach an sich für das Polyethylenterephthalat entwickelten bekannten Verfahrensweisen erfolgen, einschließlich seiner Umsetzung mit Polymerisationsgraderhöhem, beispielsweise mit 2,2'-bis (2-oxazolin), gemäß EP-A-0 169 415. Die erforderliche Erhöhung der intrinsischen Viskosität bis beispielsweise auf 0,95-1,05, was einer relativen Lösungsviskosität von 1,86 bis 2,05 entspricht, gemessen in 1 %iger m-Kresol-Lösung bei 20° C, wird vorzugsweise mittels einer abschließenden Polykondensation in fester Phase bewerkstelligt, wie sie beim Polyethylenterephthalat ebenfalls praktiziert wird. Hierbei wird das gekörnte kettenverzweigte Polyethylenterephthalat im Vakuum oder in einem Inertgasstrom auf Temperaturen unterhalb des Schmelzpunktes erhitzt, z.B. auf 230° C.

Die zweite Komponente in den erfindungsgemäßen fadenbildenden Polyestern und Copolyestern wird durch das physikalische Modifizierungsmittel dargestellt. Die physikalischen Modifizierungsmittel sind, bevorzugt polymere, Verbindungen, die im wesentlichen keine chemischen Bindungen mit den fadenbildenden Polyestern und Copolyestern eingehen. Sie sind in aller Regel in dem Matrixpolymeren, das von den fadenbildenden Polyestern und Copolyestern gebildet wird, nur teilweise löslich. Damit diese physikalischen Modifizierungsmittel oder Additive in einer Weise wirksam sind, die zu einer Erhöhung der Spinngeschwindigkeit bzw. des Durchsatzes beim Schmelzspinnen führt, sollte die Grenzfläche zwischen Polymermatrix und physikalischen Modifizierungsmittel möglichst groß sein. Bei polymeren Additiven wird eine große Grenzfläche typischerweise erreicht, wenn diese Additive während des Spinnprozesses Fibrillen ausbilden, die ein sehr großes Oberflächen/Volumenverhältnis aufweisen. Geeignete Additive müssen daher natürlich bei der Temperatur des Schmelzspinnens verformbar sein.

Es hat sich dabei als günstig erwiesen, wenn das Verhältnis aus der Nullviskosität des Additivs und der Nullviskosität des Matrixpolymers (also z.B. des chemisch modifizierten oder unmodifizierten Polyethylenterephthalats) bei der Spinntemperatur zwischen 0,01 und 5, bevorzugt zwischen 0,5 und 2, liegt. Die Nullviskosität der Polymere wird dabei nach der Methode in G. Böhme, Strömungsmechanik nicht-newtonscher Fluide, Verlag Teubner Studienbücher (1981) bestimmt.

Ein weiteres wichtiges Kriterium bei der Auswahl des physikalischen Modifizierungsmittels ist, daß sich das Additiv beim Spinnprozeß noch deutlich vor der umgebenden Polymermatrix verfestigt. Für den Fachmann bedeutet das, daß die Verfestigungstemperatur (d.h. der Anstieg der Nullviskosität gegen unendlich) des Additivs bei höheren Temperaturen stattfindet als der entsprechende Nullviskositätsanstieg des umgebenden Matrixpolymers. Die Glastemperatur des Additivs sollte größer sein als die des Matrixpolymers.

Neben den vorstehend genannten, allgemeinen Parametern zur Auswahl geeigneter physikalisch wirksamer Additive sollte zumindestens eines der folgenden meßtechnisch und/oder rechnerisch zugänglichen Kriterien, die die Wechselwirkungen zwischen dem physikalischen Modifizierungsmittel (Additiv) und dem Matrixpolymer beschreiben, erfüllt sein.

Zum einen sollte die Grenzflächenbreite $a_i$ zwischen Additiv und umgebender Matrix bei der Spinntemperatur im tanh-Grenzflächenprofil im Bereich von 6 bis 50 nm, bevorzugt zwischen 10 und 15 nm, liegen.

Dem Fachmann sind Methoden zur experimentellen Charakterisierung von Grenzflächenbreiten bekannt. Beispielhaft seien genannt, Röntgen- bzw. Neutronenreflexion, Kernreaktionsanalyse, NMR oder auch Elektonentransmissionsmikroskopie. Diese Methoden sind jedoch außerordentlich aufwendig und kostspielig. Es hat sich daher als günstig erwiesen, die Grenzflächenbreite abzuschätzen, wobei man sich der Mean-Field-Theorie bedient.

In einem 2-Phasen (Phase 1 und 2) 2-Komponentensystem (Komponente A und B) gilt folgendes tanh Grenz-flächenprofil:

$$\phi(z) = 1/2\left[(\phi_1^\bullet + \phi_2^\bullet) + (\phi_1^\bullet - \phi_2^\bullet)\tanh\left(\frac{2z}{a_i}\right)\right]$$

mit:

$\Phi(z) =$     Volumenanteil bei z

$z =$     Tiefe senkrecht zur Phasengrenzfläche ($z = 0$ an Phasengrenzfläche)

$a_i =$     Grenzflächenbreite

$\Phi_i^* =$     Bulk-Volumenanteil Komponente (A oder B) in der Phase i

Für die Grenzflächenbreite $a_i$ zwischen zwei polymeren Komponenten A und B (D. Broseta, G. Fredrickson, E. Helfand, L. Leibler, <u>Macromolecules 23</u>, 132 (1990), Ralf Schnell Dissertation 1997, Johannes-Gutenberg-Universität in Mainz) gilt: .

$$a_i = \frac{2b}{\sqrt{c\chi_{AB}}}\left[1 - 2\ln 2\left(\frac{1}{\chi_{AB}N_A} + \frac{1}{\chi_{AB}N_B}\right)\right]^{-1/2}$$

mit:

$a_i =$     Grenzflächenbreite
$b =$     mittlere Kuhnsche Segmentlänge (ca. 0,7 nm)
$c =$     Korrekturfaktor (= 9, für den Grenzfall, daß der Gyrationsradius der Ketten viel kleiner ist als die Grenzflächenbreite) (= 6, bei stark unverträglichen Polymeren, bei der die Grenzflächenbreite deutlich geringer ist als der Gyrationsradius)
$\chi_{AB} =$     Flory Huggins Wechselwirkungsparameter zwischen den polymeren Komponenten A und B
$N_i =$     Polymerisationsgrad der polymeren Komponente i

Der zur Berechnung erforderliche Flory Huggins Wechselwirkungsparameter läßt sich über die Löslichkeitsparameter der polymeren Komponenten A und B wie folgt abschätzen:

$$\chi_{AB} = \frac{V_{ref}(\delta_A - \delta_B)^2}{RT}$$

mit:

$\chi_{AB} =$     Flory Huggins Wechselwirkungsparamter zwischen den polymeren Komponenten A und B
$V_{ref} =$     Referenzvolumen (30 ccm/mol liefert z.B. bei dem gut charakterisierten System Polystyrol/Polymethylmethacrylat gute Ergebnisse. Nach Bicerano werden jedoch auch 100 ccm/mol verwendet)
$\delta_i =$     Löslichkeitsparameter der polymeren Komponente i (gemäß J. Bicerano <u>Prediction of Polymer Properties</u>, Marcel Dekker Verlag Inc., New York (1993))
$R =$     Gaskonstante (8,314 J*K-1*mol-1)
$T =$     Temperatur in Kelvin

Die polymeren Phasen A und B sind in der Regel um so besser verträglich, je geringer die Differenz ihrer Löslichkeitsparameter ist und je höher die Temperatur ist.

Ein weiteres Kriterium zur Auswahl von geeigneten physikalischen Additiven ist die Grenzflächenspannung $\gamma$ zwischen dem Additiv und der umgebenden Polymermatrix. Diese Grenzflächenspannung sollte bei der Spinntemperatur im Bereich zwischen 0,8 mN/m und 0,008 mN/m, bevorzugt zwischen 0,5 und 0,3 mN/m, liegen.
Die Messung der Grenzflächenspannungen erfolgt dabei nach der Pendant bzw. Spinning Drop Geometrie Methode (A. Stammer, Dissertation 1997, Johannes-Gutenberg-Universität in Mainz).

In der Praxis hat sich jedoch die experimentell einfachere Extrapolation von temperaturabhängigen Kontaktwinkeluntersuchungen auf Spinntemperatur als sehr hilfreich erwiesen.

Außerdem läßt sich die Grenzflächenspannung γ analog zur Grenzflächenbreite $a_i$ mit Hilfe der Mean-Field Theorie abschätzen (D. Broseta, G. Fredrickson, E. Helfand, L. Leibler, <u>Macromolecules 23</u>, 132 (1990)):

$$\gamma = \frac{kT}{b^2}\sqrt{\chi_{AB}/6}\left[1 - \frac{\pi^2}{12}*\left(\frac{1}{\chi_{AB}N_A} + \frac{1}{\chi_{AB}N_B}\right)\right]$$

mit:

γ = Grenzflächenspannung
k = Boltzmann Konstante
T = Temperatur in Kelvin
$\chi_{AB}$ = Flory Huggins Wechselwirkungsparamter zwischen den polymeren Komponenten A und B
$N_i$ = Polymerisationsgrad der polymeren Komponente i

Schließlich ist als Kriterium für die Auswahl der physikalischen Modifikatoren noch die Haftung zwischen den Phasen zu nennen. Diese Phasenhaftung sollte oberhalb von 30 J/m$^2$, bevorzugt oberhalb von 80 J/m$^2$ liegen. Die Haftung oder Adhäsion zwischen Polymeren wird mit Hilfe der "Asymmetric Double Cantilever Beam" (ADCB) Methode bestimmt, wie sie in H.R. Brown, <u>Annual Reviews in Materials Science 21,</u> 463 (1991) beschrieben ist. Dabei wird zunächst auf Spinntemperatur getempert und dann die Haftungsmessung zwischen den Polymeren bei Raumtemperatur durchgeführt.

Geeignete physikalische Additive zur Herstellung der erfindungsgemäßen fadenbildenden Polyester und Copolyester sind z.B. in den Patentanmeldungen WO 93/19231, WO 98/27158, DE 197 33 799 A1, DE 197 07 447 A1 und EP 0 047 464 B2 zu finden.

Bevorzugte Polyester und Copolyester werden erhalten, wenn das physikalische Modifizierungsmittel aus im wesentlichen imidisierten Polymethacrylsäurealkylestern, die durch Umsetzung von Polymethacrylsäureestern, deren Estergruppe einen Alkohol mit 1 bis 6 C-Atomen enthält, mit einem primären Amin mit 1 bis 3 C-Atomen zu 50 bis 90 % imidisiert sind, besteht. Dieses physikalische Additiv und sein Einsatz für Polyethylenterephthalat ist ausführlich in der WO 93/19231 beschrieben, auf die hier ausdrücklich Bezug genommen wird.

Weitere bevorzugte Polyester und Copolyester werden dadurch erhalten, daß das physikalische Modifizierungsmittel ein Copolymer aus Methylmethacrylat, Styrol und Acrylnitril ist, wobei dieses Copolymer aus 50 bis 98 Gewichtsprozent Methylmethacrylat, aus 1 bis 50 Gewichtsprozent Styrol und aus 2 bis 30 Gewichtsprozent Acrylnitril (Summe = 100 %) zusammengesetzt ist. Besonders bevorzugt ist dabei ein Copolymer als physikalisches Modifizierungsmittel, das aus 80 Gew.-% Methylmethacrylat, 15 Gew.-% Styrol und 5 Gew.-% Acrylnitril zusammengesetzt ist.

Schließlich werden fadenbildende Polyester und Copolyester bevorzugt, bei denen das physikalische Modifizierungsmittel ein Copolymer aus Methylmethacrylat und Acrylnitril ist, wobei dieses Copolymer aus 80 bis 98 Gewichtsprozent Methylmethacrylat und aus 2 bis 20 Gewichtsprozent Acrylnitril (Summe = 100 %) zusammengesetzt ist. Das Molekulargewicht der Copolymere aus Methylmethacrylat und Acrylnitri kann prinzipiell in weiten Bereichen variiert werden. Als günstig hat sich allerdings erwiesen, wenn dieses physikalische Modifizierungsmittel ein Molekulargewicht (bestimmt mittels der unten beschriebenen GPC-Methode) von 100000 bis 500000, bevorzugt von 180000 bis 350000, noch bevorzugter von etwa 250000 bis 280000, also z.B. 263000, aufweist. Besonders bevorzugt ist dabei ein Copolymer als physikalisches Modifizierungsmittel, das aus 91 Gew.-% Methylmethacrylat, und 9 Gew.-% Acrylnitril zusammengesetzt ist.

Die Herstellung solcher Copolymere ist bekannt. Beispielhaft sei verwiesen auf die DE 197 33 799 A1 und die dort zitierte Literatur.

Die Zumischung der physikalischen Modifizierungsmittel zu den fadenbildenden Polyestern und Copolyestern erfolgt günstigerweise vor dem Extruder, wobei das Faserpolymer und die Zusatzstoffe in Granulatform vorliegen sollten. Der Extruder sorgt hierbei bei der Aufschmelzung der Granulate für eine gleichmäßige Verteilung der Zusatzstoffe im Faserpolymer. Weitere statische und/oder dynamische Mischer können in der Schmelzeleitung und/oder direkt vor dem Spinnpack vorgesehen sein.

Die Zumischung kann aber auch derart erfolgen, daß die Schmelze aus Faserpolymer mit der Schmelze der Zusatzstoffe über statische und/oder dynamische Mischer vermischt wird.

Zur Herstellung der Fasern aus den erfindungsgemäßen Polyestern und Copolyestern eignen sich praktisch alle bekannten Spinnverfahren. Die erfindungsgemäßen Fasern lassen sich praktisch bei allen technisch möglichen Aufwickelgeschwindigkeiten, insbesondere bei Aufwickelgeschwindigkeiten von 500 bis 10 000 m/min problemlos herstellen.

Es ist Verdienst der vorliegenden Erfindung, daß selbst bis zu Aufwickelgeschwindigkeiten von bis zu 8000 m/min teilweise orientierte Game, d.h. Game, die noch nicht auf die für den jeweiligen Einsatzzweck erforderliche Bruchdehnung verstreckt sind, abschlägerfrei hergestellt werden können. Diese Game sind bestens für die Weiterverarbeitung geeignet. Textile Game lassen sich beispielsweise besonders vorteilhaft zu texturierten Garnen mit den hierzu üblichen Verfahren weiterverarbeiten. Industrielle Game sind für die Herstellung von Reifencorden bestens geeignet. Als Schmelzspinnverfahren eignen sich besonders Verfahren, wie sie beispielsweise in DE-PS 29 25 006 beschrieben sind.

Demzufolge betrifft die vorliegende Erfindung auch ein Verfahren zur Herstellung von fadenbildenden Polyestern und Copolyestern, indem man zunächst den polyesterbildenden Ausgangskomponenten während der Polyesterherstellung chemische Modifizierungsmittel in Form von Kettenverzweigern zur Einkondensation zufügt und dem daraus erhaltenen kettenverzweigten Polyester oder Copolyester anschließend physikalische Modifizierungsmittel in Form von polymeren Zusatzmitteln, die im wesentlichen keine chemischen Bindungen mit diesem Polyester oder Copolyester eingehen, zufügt, welches Verfahren sich dadurch auszeichnet, daß die Zugabe von physikalischen und chemischen Modifizierungsmitteln so gewählt wird, daß das Verhältnis der auf die fadenbildenden Polyester und Copolyester bezogenen Gewichtsprozente an chemischen Modifizierungsmitteln zu physikalischen Modifizierungsmitteln zwischen 0,001 und 0,5 liegt.

Im erfindungsgemäßen Verfahren ist es bevorzugt, dass das Verhältnis der auf die fadenbildenden Polyester und Copolyester bezogenen Gewichtsprozente an chemischen Modifizierungsmitteln zu physikalischen Modifizierungsmitteln zwischen 0,005 und 0,25, noch bevorzugter zwischen 0,015 und 0,05, liegt.

Für das erfindungsgemäße Verfahren ist es vorteilhaft, wenn die chemischen Modifizierungsmittel zwischen 0,005 und 0,05 Gewichtsprozent, bezogen auf die fadenbildenden Polyester und Copolyester, enthalten sind.

Im erfindungsgemäßen Verfahren ist es bevorzugt, dass die physikalischen Modifizierungsmittel zwischen 0,1 und 5 Gewichtsprozent, bezogen auf die fadenbildenden Polyester und Copolyester, enthalten sind.

Für das erfindungsgemäße Verfahren ist es vorteilhaft, wenn die chemischen Modifizierungsmittel mindestens drei esterbildende Hydroxyl- oder Carboxylgruppen enthalten, die besonders bevorzugt gewählt werden aus der Gruppe enthaltend Trimellitsäure, Pyromellitsäure, Trimethylolpropan, Pentaerythrit, Glycerin oder entsprechende Hydroxysäuren.

Noch bevorzugter enthalten die im erfindungsgemäßen Verfahren zum Einsatz kommenden chemischen Modifizierungsmittel mindestens sechs esterbildende Hydroxylgruppen, wobei sich diejenigen chemischen Modifizierungsmittel als ganz besonders günstig erwiesen haben, die gewählt werden aus der Gruppe enthaltend Dipentaerythrit, Tripentaerythrit und Tetrapentaerythrit.

Für das erfindungsgemäße Verfahren ist es weiterhin vorteilhaft, wenn das Verhältnis aus der Nullviskosität der physikalischen Modifizierungsmittel und der Nullviskosität des das Matrixpolymer bildenden Polyesters oder Copolyesters bei der Spinntemperatur zwischen 0,01 und 5 liegt.

Im erfindungsgemäßen Verfahren ist es bevorzugt, dass die Grenzflächenbreite $a_i$ zwischen den physikalischen Modifizierungsmitteln und dem das Matrixpolymer bildenden Polyester oder Copolyester bei der Spinntemperatur im Bereich von 6 bis 50 nm liegt.

Für das erfindungsgemäße Verfahren ist es vorteilhaft, wenn die Grenzflächenspannung zwischen den physikalischen Modifizierungsmitteln und dem das Matrixpolymer bildenden Polyester oder Copolyester bei der Spinntemperatur im Bereich von 0,8 mN/m und 0,008 mN/m liegt.

Im erfindungsgemäßen Verfahren ist es bevorzugt, dass das physikalische Modifizierungsmittel aus im wesentlichen imidisierten Polymethacrylsäurealkylestern, die durch Umsetzung von Polymethacrylsäureestern, deren Estergruppe einen Alkohol mit 1 bis 6 C-Atomen enthält, mit einem primären Amin mit 1 bis 3 C-Atomen zu 50 bis 90 % imidisiert sind, besteht.

Weiterhin ist es für das erfindungsgemäße Verfahren vorteilhaft, wenn das physikalische Modifizierungsmittel ein Copolymer aus Methylmethacrylat, Styrol und Acrylnitril ist, wobei dieses Copolymer aus 50 bis 98 Gewichtsprozent Methylmethacrylat, aus 1 bis 50 Gewichtsprozent Styrol und aus 2 bis 30 Gewichtsprozent Acrylnitril zusammengesetzt ist.

Für das erfindungsgemäße Verfahren ist weiterhin bevorzugt, dass das physikalische Modifizierungsmittel ein Copolymer aus Methylmethacrylat und Acrylnitril ist, wobei dieses Copolymer aus 80 bis 98 Gewichtsprozent Methylmethacrylat und aus 2 bis 20 Gewichtsprozent Acrylnitril zusammengesetzt ist. Vorteilhaft weist dieses Copolymer weiterhin ein Molekulargewicht von 100000 bis 500000, noch bevorzugter von 180000 bis 350000, auf.

Die vorliegende Erfindung ist auch auf die Verwendung der chemisch und physikalisch modifizierten fadenbildenden Polyester und Copolyester zum Schnellspinnen von textilen und industriellen Garnen mit Aufwickelgeschwindigkeiten von 2500 bis 10000 m/min, vorzugsweise von 3000 bis 6000 m/min, gerichtet, woran sich übliche Verstreckungsprozesse oder Texturierprozesse anschließen sowie die Verwendung der erfindungsgemäß modifizierten Polyester und Copolyester zu Erhöhung der Spinngeschwindigkeit und damit des Durchsatzes beim Schmelzspinnen.

Weiterhin betrifft die Erfindung die Verwendung von Polyestern und Copolyestern zum Schnellspinnen von textilen und industriellen Garnen mit Aufwickelgeschwindigkeiten von 2500 bis 10000 m/min, vorzugsweise von 3000 bis 6000 m/min, woran sich übliche Verstreckungsprozesse oder Texturierprozesse anschließen, wobei diese Polyester und Copolyester als physikalisches Modifizierungsmittel ein Copolymer aus Methylmethacrylat, Styrol und Acrylnitril enthalten, wobei dieses Copolymer aus 50 bis 98 Gewichtsprozent, bevorzugt aus 80 Gewichtsprozent, Methylmethacrylat, aus 1 bis 50 Gewichtsprozent, bevorzugt aus 15 Gewichtsprozent Styrol und aus 2 bis 30 Gewichtsprozent, bevorzugt aus 5 Gewichtsprozent, Acrylnitril (Summe = 100 Gewichtsprozent) zusammengesetzt ist.

Ebenso ist die vorliegende Erfindung auf die Verwendung von Polyestern und Copolyestern zum Schnellspinnen von textilen und industriellen Garnen mit Aufwickelgeschwindigkeiten von 2500 bis 10000 m/min, vorzugsweise von 3000 bis 6000 m/min, gerichtet, woran sich übliche Verstreckungsprozesse oder Texturierprozesse anschließen, wobei diese Polyester und Copolyester als physikalisches Modifizierungsmittel ein Copolymer aus Methylmethacrylat und Acrylnitril enthalten, wobei dieses Copolymer aus 80 bis 98 Gewichtsprozent, bevorzugt 91 Gewichtsprozent, Methylmethacrylat und aus 2 bis 20 Gewichtsprozent, bevorzugt 9 Gewichtsprozent, Acrylnitril (Summe = 100 Gewichtsprozent) zusammengesetzt ist.

Bei der zuletzt genannten Verwendung der Polyester und Copolyester wird es bevorzugt, wenn das physikalische Modifizierungsmittel ein Molekulargewicht von 100000 bis 500000, vorteilhaft von 180000 bis 350000, noch vorteilhafter von etwa 250000 bis 280000, z.B. 263000, aufweist.

Die Erfindung wird anhand der nachstehenden Beispiele näher erläutert. Die Beispiele dienen lediglich der Erläuterung und sind in keiner Weise als beschränkend auszulegen.

Gelpermeationschromatographie (GPC):

(Elutionsmittel: Tetrahydrofuran; Pumpe: Kontron 420; Fluss: 1,0 ml/min;
Injektionsventil: Rheodyne mit 20 µl Injektionsvolumen)

| Säulenkombination | (bezogen vom Polymer Standards Service, Mainz DE): Säulentemperatur 25 °C |
| | PSS-SDV (8,0 mm x 50 mm) 500 Å, 5 µm (Vorsäule) |
| | PSS-SDV (8,0 mm x 300 mm) 500 Å, 5 µm |
| | PSS-SDV (8,0 mm x 300 mm) linear, 5 µm |
| | PSS-SDV (8,0 mm x 300 mm) linear, 5 µm |
| Detektor | Waters 410, Differential Refractometer; Software: PSS-WinGPC, Version 4.02 |
| Probenvorbereitung | Die Proben werden in Tetrahydrofuran in einer Konzentration von etwa 10,0 g/l eingewogen und über Nacht gelöst. Toluol dient als interner Standard. Nach der Filtration (0,45 µm) wird die Lösung eingesprizt. |
| Kalibrierung und Auswertung | Eine Kalibrierungskurve wird mit PMMA-Standards über den Trennbereich der Säulen (beispielsweise zwischen 500 D und 2000000 D) erstellt. Die Quantifizierung der Probe kann dann mittels der Software unter Verwendung der PMMA-Standard Kalibrierungskurve erhalten werden. |

Herstellung eines Copolymers aus Methylmethacrylat und Acrylnitril

**Methode 1**

In einen 1 l Planschliffkolben, versehen mit Stickstoffeinlaß, Ankerrührer, und Tropftrichter, werden 750 g dest. Wasser, 1,5 g (0,2 % bez. auf Wasser) Polyethylenoxid (PEO 200 000 der Fa. Aldrich, Mv ~ 200000) und 3,8 g (0,5 % bez. auf Wasser) Natriumsulfat (Merck) eingewogen. Diese Vorlage wird unter Rühren bei ca. 250 U/min und unter Stickstoffspülung im Wasserbad auf 75°C aufgeheizt. Dann wird eine Mischung, bestehend aus 228,4 g Methylmethacrylat, 21,6 g Acrylnitril, 0,50 g (0,2 % bez. auf die Monomere) t-Dodecylmercaptan (Fa. Aldrich) und 2,5 g (1 % bez. auf Monomere) Dilaurylperoxid (Laurox der Fa. Akzo Nobel), innerhalb von ca. 30 Sekunden mittels des Tropftrichters zugegeben.

Der Ansatz wird 1,5 h bei 75 °C gehalten und dann innerhalb 15 Minuten auf 90 °C aufgeheizt. Bei dieser Temperatur wird nochmals für 30 Minuten gehalten. Anschließend wird der Ansatz mit einer Fritte G2 filtriert, wobei zuvor ggf. etwas abgekühlt wird, und mit ca. 2 l Wasser ausgewaschen. Getrocknet wird im Vakuum bei 60 bis 70 °C.

Das Copolymer entsteht in Form weißer Perlen mit einer Größe zwischen 0,1 bis 2 mm. Das Molekulargewicht wurde mittels der oben beschriebenen Gelpermeationschromatographie zu 263 000 bestimmt. Das Copolymer besteht zu 91,4 Gewichtsprozent aus Methylmethacrylat und zu 8,6 Gewichtsprozent aus Acrylnitril.

**Methode 2**

Methode 1 wurde wiederholt mit dem Unterschied, dass 1,0 g (0,4 % bez. auf die Monomere) t-Dodecylmercaptan zugegeben werden.
Das Molekulargewicht wurde mittels der oben beschriebenen Gelpermeationschromatographie zu 187 000 bestimmt. Das Copolymer besteht zu 91,4 Gewichtsprozent aus Methylmethacrylat und zu 8,6 Gewichtsprozent aus Acrylnitril.

**Herstellung und Spinnung von modifizierten Polyestern und Copolyestern**

Es wird zunächst in einem Zweistufenverfahren Polyethylenterephthalat hergestellt. In der ersten Stufe, der Umesterung, erfolgt die Umsetzung von Ethylenglykol und 0,015 Gewichtsprozent (bezogen auf Polyethylenterephthalat) Pentaerythrit als chemisches Verzwiegungsmittel mit Dimethylterephthalat (= DMT), wobei das Molverhältnis von Ethylenglykol zu DMT 2,15:1 beträgt und die Umesterung in Gegenwart von 100 ppm Zinkacetat ($ZnAc_2.2H_2O$) und 150 ppm $MnAc_2.4H_2O$ (Ac = Acetat) als Umesterungskatalysatoren, bezogen auf DMT, bei Temperaturen im Bereich von 175 bis 250°C durchgeführt wird. Dabei wird zur Vermeidung einer Sublimation des DMT die kontinuierliche Temperaturerhöhung von 175 auf 250°C nicht zu rasch vorgenommen. Neben den erwähnten Umesterungskatalysatoren werden 10 ppm Entschäumungsmittel M 10 zugesetzt.
Das bei der Umesterung freigesetzte Methanol wird über eine Kolonne abdestilliert. Bei Erreichen der Reaktionstemperatur von 240°C werden 50 ppm Phosphor, bezogen auf DMT, in Form des Phosphonoessigsäureethylesters zur Blockierung der Umesterungskatalysatoren zugesetzt. Beim Erreichen einer Temperatur von 245°C werden 3500 ppm $TiO_2$-Suspension in Ethylenglykol als Mattierungsmittel zugesetzt.
Sobald die Reaktionstemperatur von 250°C erreicht war, werden 400 ppm $Sb_2O_3$, und zwar als ca. 1%ige Lösung in Ethylenglykol, dem Reaktionsgemisch zugegeben. Die Polykondensationsreaktion erfolgt bei 290°C unter einem Vakuum von 2,4 Torr. Sobald die Schmelze eine relative Lösungsviskosität von ca. 1,63, gemessen in 1%iger m-Kresol-Lösung bei 20°C, erreicht hat, wird die Polykondensation beendet.
Der so hergestellte, chemisch modifizierte Polyester wird zunächst in üblicher Weise bis auf eine Restfeuchte von < 0,005% getrocknet. Bei den erfindungsgemäßen Versuchen wird dem Polyethylenterephthalat vor dessen Aufschmelzung im Extruder noch als physikalisches Modifizierungsmittel ein Copolymer, bestehend zu 91,4 Gewichtsprozent aus Methylmethacrylat und zu 8,6 Gewichtsprozent aus Acrylnitril, zugesetzt. Die Verspinnung erfolgt auf einer Spinnmaschine, die einen 2E-Extruder, einen elektrisch beheizten Heizkasten SP 47 und eine Sulzermischereinheit mit 4 Sulzern im Düsenpaket enthielt. Die frisch gesponnenen Garne werden hier einheitlich mittels einer üblichen Queranblasung gekühlt, die natürlich, je nach beabsichtigtem Zweck, andere Fadenabkühlungsmethoden, wie Radialanblasung oder self suction, nicht ausschließt. Die wesentlichen Verfahrensparameter, Art und Menge der zugesetzten physikalischen Modifizierungsmittel sowie die Eigenschaften der ersponnenen Garne sind der nachfolgenden Tabelle zu entnehmen. Sämtliche Versuche verliefen störungsfrei. Die Tabelle zeigt die Ergebnisse der Spinnungen bei einer Aufwickelgeschwindigkeit von 4200 m/min von chemisch modifizierten Polyethylenterephthalat (PET) jeweils mit (Versuche 1 und 2) und ohne (Vgl. 2) den Zusatz von 0,5 Gewichtsprozent eines physikalischen Modifizierungsmittels. Als physikalische Modifizierungsmittel werden in diesen Beispielen die oben beschriebenen Copolymere (bestehend zu 91,4 Gewichtsprozent aus Methylmethacrylat und zu 8,6 Gewichtsprozent aus Acrylnitril) in zwei unterschiedlichen Molekulargewichten eingesetzt. Zum Vergleich sind auch noch die Ergebisse der Spinnung von PET ohne Zusatz irgendwelcher Modifizierungsmittel (Vgl. 1) aufgeführt.

Tabelle

| | | Vgl. 1 | Vgl. 2 | Versuch 1 | Versuch 2 |
|---|---|---|---|---|---|
| Polymer | | PET | PET | PET | PET |
| relative Viskosität (Granulat) | | 1,63 | 1,63 | 1,63 | 1,63 |
| Polymerdurchsatz | (g/min/Düse) | 60 | 60 | 60 | 60 |
| Polymertemperatur | (°C) | 293 | 293 | 293 | 293 |
| Schmelzefiltration | (µm) | 20 | 20 | 20 | 20 |

Tabelle   (fortgesetzt)

| | | Vgl. 1 | Vgl. 2 | Versuch 1 | Versuch 2 |
|---|---|---|---|---|---|
| Chem. Modifizierungsmittet | | | Pentaerythrit | Pentaerythrit | Pentaerythrit |
| Menge | (Gew.-%) | | 0,015 | 0,015 | 0,015 |
| Physikalisches Modifizierungsmittel | | | | Methylmethacrylat/ Acrylnitril (91,4/8,6 w/w) | Methylmethacrylat/ Acrylnitril (91,4/8,6 w/w) |
| Molekulargewicht (GPC) | | | | 263000 | 187000 |
| Menge | (Gew.-%) | | | 0,5 | 0,5 |
| Verhältnis (chem./ physikal.) | | | | 0,03 | 0,03 |
| Aufwickelgeschwindigkeit | (m/min) | 4200 | 4200 | 4200 | 4200 |
| Titer | (dtex) | 88 f 36 | 88 f 36 | 88 f 36 | 88 f 36 |
| Dehnung | (%) | 87 | 101 | 130 | 104 |
| Festigkeit | (cN/tex) | 29,6 | 25,5 | 21,5 | 25,9 |

Es ist der Tabelle zu entnehmen, dass die erfinderischen Garne, die die physikalischen und chemischen Modifizierungsmittel in dem erfinderischen Verhältnis enthalten, eine höhere Dehnung als die nur chemisch bzw. gar nicht modifizierten Garne aufweisen.

**Patentansprüche**

1. Fadenbildende Polyester und Copolyester, enthaltend chemische Modifizierungsmittel in Form von einkondensierten Kettenverzweigern und physikalische Modifizierungsmittel in Form von polymeren Zusatzmitteln, die im wesentlichen keine chemischen Bindungen mit den fadenbildenden Polyestern und Copolyestern eingehen, **dadurch gekennzeichnet, daß** das Verhältnis der auf die fadenbildenden Polyester und Copolyester bezogenen Gewichtsprozente an chemischen Modifizierungsmitteln zu physikalischen Modifizierungsmitteln zwischen 0,001 und 0,5 liegt.

2. Polyester und Copolyester nach Anspruch 1, **dadurch gekennzeichnet, daß** das Verhältnis der auf die fadenbildenden Polyester und Copolyester bezogenen Gewichtsprozente an chemischen Modifizierungsmitteln zu physikalischen Modifizierungsmitteln zwischen 0,005 und 0,25 liegt.

3. Polyester und Copolyester nach Anspruch 1, **dadurch gekennzeichnet, daß** das Verhältnis der auf die fadenbildenden Polyester und Copolyester bezogenen Gewichtsprozente an chemischen Modifizierungsmitteln zu physikalischen Modifizierungsmitteln zwischen 0,015 und 0,05 liegt.

4. Polyester und Copolyester nach einem oder mehreren der Ansprüche 1 bis 3, **dadurch gekennzeichnet, daß** die chemischen Modifizierungsmittel zwischen 0,005 und 0,05 Gewichtsprozent, bezogen auf die fadenbildenden Polyester und Copolyester, enthalten sind.

5. Polyester und Copolyester nach einem oder mehreren der Ansprüche 1 bis 4, **dadurch gekennzeichnet, daß** die physikalische Modifizierungsmittel zwischen 0,1 und 5 Gewichtsprozent, bezogen auf die fadenbildenden Polyester und Copolyester, enthalten sind.

6. Polyester und Copolyester nach einem oder mehreren der Ansprüche 1 bis 5, **dadurch gekennzeichnet, daß** die chemischen Modifizierungsmittel mindestens drei esterbildende Hydroxyl- oder Carboxylgruppen enthalten.

7. Polyester und Copolyester nach einem oder mehreren der Ansprüche 1 bis 6, **dadurch gekennzeichnet, daß** die chemischen Modifizierungsmittel gewählt werden aus der Gruppe enthaltend Trimellitsäure, Pyromellitsäure, Trimethylolpropan, Pentaerythrit, Glycerin oder entsprechende Hydroxysäuren.

8. Polyester und Copolyester nach einem oder mehreren der Ansprüche 1 bis 5, **dadurch gekennzeichnet, daß** die chemischen Modifizierungsmittel mindestens sechs esterbildende Hydroxylgruppen enthalten.

9. Polyester und Copolyester nach Anspruch 8, **dadurch gekennzeichnet, daß** die chemischen Modifizierungsmittel gewählt werden aus der Gruppe enthaltend Dipentaerythrit, Tripentaerythrit und Tetrapentaerythrit.

10. Polyester und Copolyester nach einem oder mehreren der Ansprüche 1 bis 9, **dadurch gekennzeichnet, daß** das Verhältnis aus der Nullviskosität der physikalischen Modifizierungsmittel und der Nullviskosität des das Matrixpolymer bildenden Polyesters oder Copolyesters bei der Spinntemperatur zwischen 0,01 und 5 liegt.

11. Polyester und Copolyester nach einem oder mehreren der Ansprüche 1 bis 10, **dadurch gekennzeichnet, daß** die Grenzflächenbreite $a_i$ zwischen den physikalischen Modifizierungsmitteln und dem das Matrixpolymer bildenden Polyester oder Copolyester bei der Spinntemperatur im Bereich von 6 bis 50 nm liegt.

12. Polyester und Copolyester nach einem oder mehreren der Ansprüche 1 bis 11, **dadurch gekennzeichnet, daß** die Grenzflächenspannung zwischen den physikalischen Modifizierungsmitteln und dem das Matrixpolymer bildenden Polyester oder Copolyester bei der Spinntemperatur im Bereich von 0,8 mN/m und 0,008 mN/m liegt.

13. Polyester und Copolyester nach einem oder mehreren der Ansprüche 1 bis 12, **dadurch gekennzeichnet, daß** das physikalische Modifizierungsmittel aus im wesentlichen imidisierten Polymethacrylsäurealkylestern, die durch Umsetzung von Polymethacrylsäureestern, deren Estergruppe einen Alkohol mit 1 bis 6 C-Atomen enthält, mit einem primären Amin mit 1 bis 3 C-Atomen zu 50 bis 90 % imidisiert sind, besteht.

14. Polyester und Copolyester nach einem oder mehreren der Ansprüche 1 bis 12, **dadurch gekennzeichnet, daß** das physikalische Modifizierungsmittel ein Copolymer aus Methylmethacrylat, Styrol und Acrylnitril ist, wobei dieses Copolymer aus 50 bis 98 Gewichtsprozent Methylmethacrylat, aus 1 bis 50 Gewichtsprozent Styrol und aus 2 bis 30 Gewichtsprozent Acrylnitril zusammengesetzt ist.

15. Polyester und Copolyester nach einem oder mehreren der Ansprüche 1 bis 12, **dadurch gekennzeichnet, daß** das physikalische Modifizierungsmittel ein Copolymer aus Methylmethacrylat und Acrylnitril ist, wobei dieses Copolymer aus 80 bis 98 Gewichtsprozent Methylmethacrylat und aus 2 bis 20 Gewichtsprozent Acrylnitril zusammengesetzt ist.

16. Polyester und Copolyester nach Anspruch 15, **dadurch gekennzeichnet, dass** das physikalische Modifizierungsmittel ein Molekulargewicht von 100000 bis 500000, bevorzugt von 180000 bis 350000, aufweist.

17. Verfahren zur Herstellung von fadenbildenden Polyestern und Copolyestern, indem man zunächst den polyesterbildenden Ausgangskomponenten während der Polyesterherstellung chemische Modifizierungsmittel in Form von Kettenverzweigern zur Einkondensation zufügt und dem daraus erhaltenen ketteriverzweigten Polyester oder Copolyester anschließend physikalische Modifizierungsmittel in Form von polymeren Zusatzmitteln, die im wesentlichen keine chemischen Bindungen mit diesem Polyester oder Copolyester eingehen, zufügt, **dadurch gekennzeichnet, daß** das Verhältnis der auf die fadenbildenden Polyester und Copolyester bezogenen Gewichtsprozente an chemischen Modifizierungsmitteln zu physikalischen Modifizierungsmitteln zwischen 0,001 und 0,5 liegt.

18. Verfahren nach Anspruch 17 , **dadurch gekennzeichnet, daß** das Verhältnis der auf die fadenbildenden Polyester und Copolyester bezogenen Gewichtsprozente an chemischen Modifizierungsmitteln zu physikalischen Modifizierungsmitteln zwischen 0,005 und 0,25 liegt.

19. Verfahren nach Anspruch 17 , **dadurch gekennzeichnet, daß** das Verhältnis der auf die fadenbildenden Polyester und Copolyester bezogenen Gewichtsprozente an chemischen Modifizierungsmitteln zu physikalischen Modifizierungsmitteln zwischen 0,015 und 0,05 liegt.

20. Verfahren nach einem oder mehreren der Ansprüche 17 bis 19, **dadurch gekennzeichnet, daß** die chemischen Modifizierungsmittel zwischen 0,005 und 0,05 Gewichtsprozent, bezogen auf die fadenbildenden Polyester und Copolyester, enthalten sind.

21. Verfahren nach einem oder mehreren der Ansprüche 17 bis 19, **dadurch gekennzeichnet, daß** die physikalischen Modifizierungsmittel zwischen 0,1 und 5 Gewichtsprozent, bezogen auf die fadenbildenden Polyester und Copolyester, enthalten sind.

22. Verfahren nach einem oder mehreren der Ansprüche 17 bis 21, **dadurch gekennzeichnet, daß** die chemischen Modifizierungsmittel mindestens drei esterbildende Hydroxyl- oder Carboxylgruppen enthalten.

23. Verfahren nach Anspruch 22, **dadurch gekennzeichnet, daß** die chemischen Modifizierungsmittel gewählt werden aus der Gruppe enthaltend Trimellitsäure, Pyromellitsäure, Trimethylolpropan, Pentaerythrit, Glycerin oder entsprechende Hydroxysäuren.

24. Verfahren nach einem oder mehreren der Ansprüche 17 bis 21, **dadurch gekennzeichnet, daß** die chemischen Modifizierungsmittel mindestens sechs esterbildende Hydroxylgruppen enthalten.

25. Verfahren nach Anspruch 24, **dadurch gekennzeichnet, daß** die chemischen Modifizierungsmittel gewählt werden aus der Gruppe enthaltend Dipentaerythrit, Tripentaerythrit und Tetrapentaerythrit.

26. Verfahren nach einem oder mehreren der Ansprüche 17 bis 25, **dadurch gekennzeichnet, daß** das Verhältnis aus der Nullviskosität der physikalischen Modifizierungsmittel und der Nullviskosität des das Matrixpolymer bildenden Polyesters oder Copolyesters bei der Spinntemperatur zwischen 0,01 und 5 liegt.

27. Verfahren nach einem oder mehreren der Ansprüche 17 bis 25, **dadurch gekennzeichnet, daß** die Grenzflächenbreite $a_i$ zwischen den physikalischen Modifizierungsmitteln und dem das Matrixpolymer bildenden Polyester oder Copolyester bei der Spinntemperatur im Bereich von 6 bis 50 nm liegt.

28. Verfahren nach einem oder mehreren der Ansprüche 17 bis 25, **dadurch gekennzeichnet, daß** die Grenzflächenspannung zwischen den physikalischen Modifizierungsmitteln und dem das Matrixpolymer bildenden Polyester oder Copolyester bei der Spinntemperatur im Bereich von 0,8 mN/m und 0,008 mN/m liegt.

29. Verfahren nach einem oder mehreren der Ansprüche 17 bis 28, **dadurch gekennzeichnet, daß** das physikalische Modifizierungsmittel aus im wesentlichen imidisierten Polymethacrylsäurealkylestern, die durch Umsetzung von Polymethacrylsäureestern, deren Estergruppe einen Alkohol mit 1 bis 6 C-Atomen enthält, mit einem primären Amin mit 1 bis 3 C-Atomen zu 50 bis 90 % imidisiert sind, besteht.

30. Verfahren nach einem oder mehreren der Ansprüche 17 bis 28, **dadurch gekennzeichnet, daß** das physikalische Modifizierungsmittel ein Copolymer aus Methylmethacrylat, Styrol und Acrylnitril ist, wobei dieses Copolymer aus 50 bis 98 Gewichtsprozent Methylmethacrylat, aus 1 bis 50 Gewichtsprozent Styrol und aus 2 bis 30 Gewichtsprozent Acrylnitril zusammengesetzt ist.

31. Verfahren nach einem oder mehreren der Ansprüche 17 bis 28, **dadurch gekennzeichnet, daß** das physikalische Modifizierungsmittel ein Copolymer aus Methylmethacrylat und Acrylnitril ist, wobei dieses Copolymer aus 80 bis 98 Gewichtsprozent Methylmethacrylat und aus 2 bis 20 Gewichtsprozent Acrylnitril zusammengesetzt ist.

32. Verfahren nach Anspruch 31 , **dadurch gekennzeichnet, dass** das physikalische Modifizierungsmittel ein Molekulargewicht von 100000 bis 500000, bevorzugt von 180000 bis 350000, aufweist.

33. Verwendung der Polyester und Copolyester gemäß den Ansprüchen 1 bis 16 zum Schnellspinnen von textilen und industriellen Garnen mit Aufwickelgeschwindigkeiten von 2500 bis 10000 m/min, vorzugsweise von 3000 bis 6000 m/min, woran sich übliche Verstreckungsprozesse oder Texturierprozesse anschließen.

34. Verwendung von Polyestern und Copolyestern gemäß den Ansprüchen 1 bis 16 zu Erhöhung der Spinngeschwindigkeit und damit des Durchsatzes beim Schmelzspinnen.

35. Verwendung von Polyestern und Copolyestern nach einem oder mehreren der Ansprüche 1 bis 16 zum Schnellspinnen von textilen und industriellen Garnen mit Aufwickelgeschwindigkeiten von 2500 bis 10000 m/min, vorzugsweise von 3000 bis 6000 m/min, woran sich übliche Verstreckungsprozesse oder Texturierprozesse anschließen, **dadurch gekennzeichnet, daß** diese Polyester und Copolyester als physikalisches Modifizierungsmittel ein Copolymer aus Methylmethacrylat Styrol und Acrylnitril enthalten, wobei dieses Copolymer aus 50 bis 98 Gewichtsprozent Methylmethacrylat, aus 1 bis 50 Gewichtsprozent Styrol und aus 2 bis 30 Gewichtsprozent Acrylnitril zusammengesetzt ist.

36. Verwendung von Polyestern und Copolyestern Copolyestern nach einem oder mehreren der Ansprüche 1 bis 16 zum Schnellspinnen von textilen und industriellen Garnen mit Aufwickelgeschwindigkeiten von 2500 bis 10000 m/min, vorzugsweise von 3000 bis 6000 m/min, woran sich übliche Verstrekkungsprozesse oder Texturierprozesse anschließen, **dadurch gekennzeichnet, daß** diese Polyester und Copolyester als physikalisches Modifizierungsmittel ein Copolymer aus Methylmethacrylat und Acrylnitril enthalten, wobei dieses Copolymer aus 80 bis 98 Gewichtsprozent Methylmethacrylat und aus 2 bis 20 Gewichtsprozent Acrylnitril zusammengesetzt ist.

37. Die Verwendung der Polyester und Copolyester nach Anspruch 36, **dadurch gekennzeichnet, dass** das physikalische Modifizierungsmittel ein Molekulargewicht von 100000 bis 500000, bevorzugt von 180000 bis 350000, aufweist.

**Claims**

1. Filament-forming polyesters and copolyesters containing chemical modifiers in the form of condensed-in chain-branching agents and physical modifiers in the form of polymer additives that do not substantially form chemical bonds with the filament-forming polyesters and copolyesters, **characterized in that** the ratio of the weight percentages, referred to the filament-forming polyesters and copolyesters, of chemical to physical modifiers is between 0.001 and 0.5.

2. Polyesters and copolyesters according to Claim 1, **characterized in that** the ratio of the weight percentages, referred to the filament-forming polyesters and copolyesters, of chemical to physical modifiers is between 0.005 and 0.25.

3. Polyesters and copolyesters according to Claim 1, **characterized in that** the ratio of the weight percentages, referred to the filament-forming polyesters and copolyesters, of chemical to physical modifiers is between 0.015 and 0.05.

4. Polyesters and copolyesters according to one or more of Claims 1 to 3, **characterized in that** the weight percentage, referred to the filament-forming polyesters and copolyesters, of the chemical modifiers is between 0.005 and 0.05.

5. Polyesters and copolyesters according to one or more of Claims 1 to 4, **characterized in that** the weight percentage, referred to the filament-forming polyesters and copolyesters, of the physical modifiers is between 0.1 and 5.

6. Polyesters and copolyesters according to one or more of Claims 1 to 5, **characterized in that** the chemical modifiers contain at least three ester-forming hydroxyl or carboxyl groups.

7. Polyesters and copolyesters according to one or more of Claims 1 to 6, **characterized in that** the chemical modifiers are selected from the group comprising trimellitic acid, pyromellitic acid, trimethylol propane, pentaerythritol, glycerin, or corresponding hydroxy acids.

8. Polyesters and copolyesters according to one or more of Claims 1 to 5, **characterized in that** the chemical modifiers contain at least six ester-forming hydroxyl groups.

9. Polyesters and copolyesters according to Claim 8, **characterized in that** the chemical modifiers are selected from the group comprising dipentaerythritol, tripentaerythritol, and tetrapentaerythritol.

10. Polyesters and copolyesters according to one or more of Claims 1 to 9, **characterized in that** the ratio of the zero shear-rate viscosity of the physical modifiers to the zero shear-rate viscosity of the polyester or copolyester forming the matrix polymer is between 0.01 and 5 at the spinning temperature.

11. Polyesters and copolyesters according to one or more of Claims 1 to 10, **characterized in that** the interface thickness $a_i$ between the physical modifiers and the polyester or copolyester forming the matrix polymer is in the range from 6 to 50 nm at the spinning temperature.

**12.** Polyesters and copolyesters according to one or more of Claims 1 to 11, **characterized in that** the interfacial tension between the physical modifiers and the polyester or copolyester forming the matrix polymer is in the range from 0.8 mN/m to 0.008 mN/m at the spinning temperature.

**13.** Polyesters and copolyesters according to one or more of Claims 1 to 12, **characterized in that** the physical modifier consists of substantially imidized polymethacrylic acid alkyl esters that are 50 to 90% imidized by converting polymethacrylic acid esters whose ester group contains an alcohol with 1 to 6 C atoms with a primary amine with 1 to 3 C atoms.

**14.** Polyesters and copolyesters according to one or more of Claims 1 to 12, **characterized in that** the physical modifier is a copolymer made from methyl methacrylate, styrene, and acrylonitrile, whereby this copolymer is composed of 50 to 98% by weight methyl methacrylate, 1 to 50% by weight styrene, and 2 to 30% by weight acrylonitrile.

**15.** Polyesters and copolyesters according to one or more of Claims 1 to 12, **characterized in that** the physical modifier is a copolymer made from methyl methacrylate and acrylonitrile, whereby this copolymer is composed of 80 to 98% by weight methyl methacrylate and 2 to 20% by weight acrylonitrile.

**16.** Polyesters and copolyesters according to Claim 15, **characterized in that** the physical modifier has a molecular weight of 100000 to 500000, preferably 180000 to 350000.

**17.** Process for producing filament-forming polyesters and copolyesters by initially adding, to the polyester-forming starting components during polyester production, chemical modifiers in the form of chain-branching agents to be condensed-in and then adding, to the resulting chain-branched polyester or copolyester, physical modifiers in the form of polymer additives that do not substantially form chemical bonds with this polyester or copolyester, **characterized in that** the ratio of the weight percentages, referred to the filament-forming polyesters and copolyesters, of chemical to physical modifiers is between 0.001 and 0.5.

**18.** Process according to Claim 17, **characterized in that** the ratio of the weight percentages, referred to the filament-forming polyesters and copolyesters, of chemical to physical modifiers is between 0.005 and 0.25.

**19.** Process according to Claim 17, **characterized in that** the ratio of the weight percentages, referred to the filament-forming polyesters and copolyesters, of chemical to physical modifiers is between 0.015 and 0.05.

**20.** Process according to one or more of Claims 17 to 19, **characterized in that** the weight percentage, referred to the filament-forming polyesters and copolyesters, of the chemical modifiers is between 0.005 and 0.05.

**21.** Process according to one or more of Claims 17 to 19, **characterized in that** the weight percentage, referred to the filament-forming polyesters and copolyesters, of the physical modifiers is between 0.1 and 5.

**22.** Process according to one or more of Claims 17 to 21, **characterized in that** the chemical modifiers contain at least three ester-forming hydroxyl or carboxyl groups.

**23.** Process according to Claim 22, **characterized in that** the chemical modifiers are selected from the group comprising trimellitic acid, pyromellitic acid, trimethylol propane, pentaerythritol, glycerin, or corresponding hydroxy acids.

**24.** Process according to one or more of Claims 17 to 21, **characterized in that** the chemical modifiers contain at least six ester-forming hydroxyl groups.

**25.** Process according to Claim 24, **characterized in that** the chemical modifiers are selected from the group comprising dipentaerythritol, tripentaerythritol, and tetrapentaerythritol.

**26.** Process according to one or more of Claims 17 to 25, **characterized in that** the ratio of the zero shear-rate viscosity of the physical modifiers to the zero shear-rate viscosity of the polyester or copolyester forming the matrix polymer is between 0.01 and 5 at the spinning temperature.

**27.** Process according to one or more of Claims 17 to 25, **characterized in that** the interface thickness $a_i$ between the physical modifiers and the polyester or copolyester forming the matrix polymer is in the range from 6 and 50 nm at the spinning temperature.

28. Process according to one or more of Claims 17 to 25, **characterized in that** the interfacial tension between the physical modifiers and the polyester or copolyester forming the matrix polymer is in the range from 0.8 mN/m and 0.008 mN/m at the spinning temperature.

29. Process according to one or more of Claims 17 to 28, **characterized in that** the physical modifier consists of substantially imidized polymethacrylic acid alkyl esters that are 50 to 90% imidized by converting polymethacrylic acid esters whose ester group contains an alcohol with 1 to 6 C atoms with a primary amine with 1 to 3 C atoms.

30. Process according to one or more of Claims 17 to 28, **characterized in that** the physical modifier is a copolymer made from methyl methacrylate, styrene, and acrylonitrile, whereby this copolymer is composed of 50 to 98% by weight methyl methacrylate, 1 to 50% by weight styrene, and 2 to 30% by weight acrylonitrile.

31. Process according to one or more of Claims 17 to 28, **characterized in that** the physical modifier is a copolymer made from methyl methacrylate and acrylonitrile, whereby this copolymer is composed of 80 to 98% by weight methyl methacrylate and 2 to 20% by weight acrylonitrile.

32. Process according to Claim 31, **characterized in that** the physical modifier has a molecular weight of 100000 to 500000, preferably 180000 to 350000.

33. Use of the polyesters and copolyesters according to Claims 1 to 16 for high-speed spinning of textile and industrial yarns with winding speeds of 2500 to 10000 m/min, preferably 3000 to 6000 m/min, followed by conventional drawing or texturizing processes.

34. Use of polyesters and copolyesters according to Claims 1 to 16 to increase the spinning speed and thus the throughput during melt spinning.

35. Use of polyesters and copolyesters according to one or more of Claims 1 to 16 for high-speed spinning of textile and industrial yarns with winding speeds of 2500 to 10000 m/min, preferably 3000 to 6000 m/min, followed by conventional drawing or texturizing processes, **characterized in that** these polyesters and copolyesters contain as a physical modifier a copolymer made from methyl methacrylate, styrene, and acrylonitrile, whereby this copolymer is composed of 50 to 98% by weight methyl methacrylate, 1 to 50% by weight styrene, and 2 to 30% by weight acrylonitrile.

36. Use of polyesters and copolyesters according to one or more of Claims 1 to 16 for high-speed spinning of textile and industrial yarns with winding speeds of 2500 to 10000 m/min, preferably 3000 to 6000 m/min, followed by conventional drawing or texturizing processes, **characterized in that** these polyesters and copolyesters contain as a physical modifier a copolymer made from methyl methacrylate and acrylonitrile, whereby this copolymer is composed of 80 to 98% by weight methyl methacrylate and 2 to 20% by weight acrylonitrile.

37. Use of the polyesters and copolyesters according to Claim 36, **characterized in that** the physical modifier has a molecular weight of 100000 to 500000, preferably 180000 to 350000.

**Revendications**

1. Polyesters et copolyesters filables, comportant des modificateurs chimiques qui sont des ramificateurs incorporés dans les chaînes, ainsi que des modificateurs physiques qui sont des adjuvants polymères ne formant pratiquement pas de liaisons chimiques avec les polyesters et copolyesters filables, **caractérisés en ce que** le rapport du pourcentage pondéral, rapporté aux polyesters et copolyesters filables, des modificateurs chimiques à celui des modificateurs physiques vaut de 0,001 à 0,5.

2. Polyesters et copolyesters conformes à la revendication 1, **caractérisés en ce que** le rapport du pourcentage pondéral, rapporté aux polyesters et copolyesters filables, des modificateurs chimiques à celui des modificateurs physiques vaut de 0,005 à 0,25.

3. Polyesters et copolyesters conformes à la revendication 1, **caractérisés en ce que** le rapport du pourcentage pondéral, rapporté aux polyesters et copolyesters filables, des modificateurs chimiques à celui des modificateurs physiques vaut de 0,015 à 0,05.

4. Polyesters et copolyesters conformes à l'une ou plusieurs des revendications 1 à 3, **caractérisés en ce que** les modificateurs chimiques y sont contenus en une quantité représentant de 0,005 à 0,05 % du poids des polyesters et copolyesters filables.

5. Polyesters et copolyesters conformes à l'une ou plusieurs des revendications 1 à 4, **caractérisés en ce que** les modificateurs physiques y sont contenus en une quantité représentant de 0,1 à 5 % du poids des polyesters et copolyesters filables.

6. Polyesters et copolyesters conformes à l'une ou plusieurs des revendications 1 à 5, **caractérisés en ce que** les modificateurs chimiques comportent au moins 3 groupes hydroxyle ou carboxyle formateurs d'esters.

7. Polyesters et copolyesters conformes à l'une ou plusieurs des revendications 1 à 6, **caractérisés en ce que** les modificateurs chimiques sont choisis dans l'ensemble comprenant l'acide trimellitique, l'acide pyromellitique, le triméthylolpropane, le pentaérythritol, le glycérol et les hydroxy-acides correspondants.

8. Polyesters et copolyesters conformes à l'une ou plusieurs des revendications 1 à 5, **caractérisés en ce que** les modificateurs chimiques comportent au moins 6 groupes hydroxyle formateurs d'esters.

9. Polyesters et copolyesters conformes à la revendication 8, **caractérisés en ce que** les modificateurs chimiques sont choisis dans l'ensemble comprenant le dipentaérythritol, le tripentaérythritol et le tétrapentaérythritol.

10. Polyesters et copolyesters conformes à l'une ou plusieurs des revendications 1 à 9, **caractérisés en ce que** le rapport entre la viscosité limite des modificateurs physiques et la viscosité limite du polyester ou copolyester constituant le polymère de matrice vaut de 0,01 à 5 à la température de filage.

11. Polyesters et copolyesters conformes à l'une ou plusieurs des revendications 1 à 10, **caractérisés en ce que** la largeur $a_i$ de l'interface entre les modificateurs physiques et le polyester ou copolyester constituant le polymère de matrice vaut de 6 à 50 nm à la température de filage.

12. Polyesters et copolyesters conformes à l'une ou plusieurs des revendications 1 à 11, **caractérisés en ce que** la tension interfaciale entre les modificateurs physiques et le polyester ou copolyester constituant le polymère de matrice vaut de 0,8 à 0,008 mN/m à la température de filage.

13. Polyesters et copolyesters conformes à l'une ou plusieurs des revendications 1 à 12, **caractérisés en ce que** le modificateur physique consiste en des poly(méthacrylate d'alkyle) notablement imidifiés, que l'on obtient en faisant réagir avec une amine primaire en $C_{1-3}$ des polyméthacrylates dont le groupe ester dérive d'un alcool en $C_{1-6}$, jusqu'à ce qu'ils soient imidifiés à un taux de 50 à 90 %.

14. Polyesters et copolyesters conformes à l'une ou plusieurs des revendications 1 à 12, **caractérisés en ce que** le modificateur physique est un copolymère de méthacrylate de méthyle, de styrène et d'acrylonitrile, lequel copolymère est composé de 50 à 98 % en poids de méthacrylate de méthyle, 1 à 50 % en poids de styrène et 2 à 30 % en poids d'acrylonitrile.

15. Polyesters et copolyesters conformes à l'une ou plusieurs des revendications 1 à 12, **caractérisés en ce que** le modificateur physique est un copolymère de méthacrylate de méthyle et d'acrylonitrile, lequel copolymère est composé de 80 à 98 % en poids de méthacrylate de méthyle et de 2 à 20 % en poids d'acrylonitrile.

16. Polyesters et copolyesters conformes à la revendication 15, **caractérisés en ce que** le poids moléculaire du modificateur physique vaut de 100 000 à 500 000, et de préférence de 180 000 à 350 000.

17. Procédé de fabrication de polyesters et copolyesters filables, dans lequel on ajoute d'abord aux composants de départ formateurs de polyester, pendant la préparation du polyester, des modificateurs chimiques qui sont des ramificateurs à incorporer dans la chaîne, et l'on ajoute ensuite, au polyester ou copolyester ramifié ainsi obtenu, des modificateurs physiques qui sont des adjuvants polymères ne formant pratiquement pas de liaisons chimiques avec ce polyester ou copolyester, lequel procédé est **caractérisé en ce que** le rapport du pourcentage pondéral, rapporté aux polyesters et copolyesters filables, des modificateurs chimiques à celui des modificateurs physiques vaut de 0,001 à 0,5.

18. Procédé conforme à la revendication 17, **caractérisé en ce que** le rapport du pourcentage pondéral, rapporté aux polyesters et copolyesters filables, des modificateurs chimiques à celui des modificateurs physiques vaut de 0,005 à 0,25.

19. Procédé conforme à la revendication 17, **caractérisé en ce que** le rapport du pourcentage pondéral, rapporté aux polyesters et copolyesters filables, des modificateurs chimiques à celui des modificateurs physiques vaut de 0,015 à 0,05.

20. Procédé conforme à l'une ou plusieurs des revendications 17 à 19, **caractérisé en ce que** les modificateurs chimiques sont ajoutés en une quantité représentant de 0,005 à 0,05 % du poids des polyesters et copolyesters filables.

21. Procédé conforme à l'une ou plusieurs des revendications 17 à 19, **caractérisé en ce que** les modificateurs physiques sont ajoutés en une quantité représentant de 0,1 à 5 % du poids des polyesters et copolyesters filables.

22. Procédé conforme à l'une ou plusieurs des revendications 17 à 21, **caractérisé en ce que** les modificateurs chimiques comportent au moins 3 groupes hydroxyle ou carboxyle formateurs d'esters.

23. Procédé conforme à la revendication 22, **caractérisé en ce que** les modificateurs chimiques sont choisis dans l'ensemble comprenant l'acide trimellitique, l'acide pyromellitique, le triméthylolpropane, le pentaérythritol, le glycérol et les hydroxy-acides correspondants.

24. Procédé conforme à l'une ou plusieurs des revendications 17 à 21, **caractérisé en ce que** les modificateurs chimiques comportent au moins 6 groupes hydroxyle formateurs d'esters.

25. Procédé conforme à la revendication 24, **caractérisé en ce que** les modificateurs chimiques sont choisis dans l'ensemble comprenant le dipentaérythritol, le tripentaérythritol et le tétrapentaérythritol.

26. Procédé conforme à l'une ou plusieurs des revendications 17 à 25, **caractérisé en ce que** le rapport entre la viscosité limite des modificateurs physiques et la viscosité limite du polyester ou copolyester constituant le polymère de matrice vaut de 0,01 à 5 à la température de filage.

27. Procédé conforme à l'une ou plusieurs des revendications 17 à 25, **caractérisé en ce que** la largeur $a_i$ de l'interface entre les modificateurs physiques et le polyester ou copolyester constituant le polymère de matrice vaut de 6 à 50 nm à la température de filage.

28. Procédé conforme à l'une ou plusieurs des revendications 17 à 25, **caractérisé en ce que** la tension interfaciale entre les modificateurs physiques et le polyester ou copolyester constituant le polymère de matrice vaut de 0,8 à 0,008 mN/m à la température de filage.

29. Procédé conforme à l'une ou plusieurs des revendications 17 à 28, **caractérisé en ce que** le modificateur physique consiste en des poly(méthacrylate d'alkyle) notablement imidifiés, que l'on obtient en faisant réagir avec une amine primaire en $C_{1-3}$ des polyméthacrylates dont le groupe ester dérive d'un alcool en $C_{1-6}$, jusqu'à ce qu'ils soient imidifiés à un taux de 50 à 90 %.

30. Procédé conforme à l'une ou plusieurs des revendications 17 à 28, **caractérisé en ce que** le modificateur physique est un copolymère de méthacrylate de méthyle, de styrène et d'acrylonitrile, lequel copolymère est composé de 50 à 98 % en poids de méthacrylate de méthyle, 1 à 50 % en poids de styrène et 2 à 30 % en poids d'acrylonitrile.

31. Procédé conforme à l'une ou plusieurs des revendications 17 à 28, **caractérisé en ce que** le modificateur physique est un copolymère de méthacrylate de méthyle et d'acrylonitrile, lequel copolymère est composé de 80 à 98 % en poids de méthacrylate de méthyle et de 2 à 20 % en poids d'acrylonitrile.

32. Procédé conforme à la revendication 31, **caractérisé en ce que** le poids moléculaire du modificateur physique vaut de 100 000 à 500 000, et de préférence de 180 000 à 350 000.

**33.** Emploi de polyesters et copolyesters, conformes à l'une des revendications 1 à 16, pour le filage rapide de filés textiles ou industriels, à une vitesse d'enroulement de 2 500 à 10 000 m/min et de préférence de 3 000 à 6 000 m/min, à quoi font suite des opérations habituelles d'étirage ou de texturation.

**34.** Emploi de polyesters et copolyesters conformes à l'une des revendications 1 à 16, en vue de l'augmentation de la vitesse de filage et par là du rendement, dans un procédé de filage à l'état fondu.

**35.** Emploi de polyesters et copolyesters pour le filage rapide de filés textiles ou industriels, à une vitesse d'enroulement de 2 500 à 10 000 m/min et de préférence de 3 000 à 6 000 m/min, à quoi font suite des opérations habituelles d'étirage ou de texturation, **caractérisé en ce que** ces polyesters et copolyesters contiennent, en tant que modificateur physique, un copolymère de méthacrylate de méthyle, de styrène et d'acrylonitrile, lequel copolymère est composé de 50 à 98 % en poids de méthacrylate de méthyle, 1 à 50 % en poids de styrène et 2 à 30 % en poids d'acrylonitrile.

**36.** Emploi de polyesters et copolyesters pour le filage rapide de filés textiles ou industriels, à une vitesse d'enroulement de 2 500 à 10 000 m/min et de préférence de 3 000 à 6 000 m/min, à quoi font suite des opérations habituelles d'étirage ou de texturation, **caractérisé en ce que** ces polyesters et copolyesters contiennent, en tant que modificateur physique, un copolymère de méthacrylate de méthyle et d'acrylonitrile, lequel copolymère est composé de 80 à 98 % en poids de méthacrylate de méthyle et de 2 à 20 % en poids d'acrylonitrile.

**37.** Emploi de polyesters et copolyesters, conforme à la revendication 36, **caractérisé en ce que** le poids moléculaire du modificateur physique vaut de 100 000 à 500 000, et de préférence de 180 000 à 350 000.